# EUROPEAN PATENT SPECIFICATION

(11) **EP 2 714 598 B1**
(45) Date of publication and mention of the grant of the patent: **22.03.2017**
(21) Application number: 12790011.6
(22) Date of filing: 24.05.2012
(51) Int. Cl.: C02F 1/469, B01D 35/06, B01D 61/42

(54) **APPARATUS AND METHOD FOR CONTROLLING TOTAL DISSOLVED SOLIDS, AND WATER TREATMENT APPARATUS INCLUDING THE SAME**
VORRICHTUNG UND VERFAHREN ZUR STEUERUNG KOMPLETT GELÖSTER FESTSTOFFE SOWIE WASSERBEHANDLUNGSVORRICHTUNG DAMIT
APPAREIL ET PROCÉDÉ DE RÉGULATION DES SOLIDES DISSOUS TOTAUX, ET APPAREIL DE TRAITEMENT DE L'EAU LE CONTENANT

(30) Priority: 25.05.2011 KR 20110049621; 30.06.2011 KR 20110065149; 14.05.2012 KR 20120051099; 14.05.2012 KR 20120051100
(43) Date of publication of application: 09.04.2014
(73) Proprietor: Coway Co., Ltd., Chungcheongnam-do 314-895 (KR)
(72) Inventor: SON, Tae-Yong, Seoul 151-185 (KR); LEE, Soo-Young, Seoul 151-185 (KR); MOON, Hyoung-Min, Seoul 151-185 (KR); LEE, Kyung-Heon, Seoul 151-185 (KR); JUNG, Hee-Do, Seoul 151-185 (KR); LEE, Hyun-Woo, Seoul 151-185 (KR); HONG, Jin-Pyo, Seoul 151-185 (KR)
(74) Representative: Nederlandsch Octrooibureau
(86) International application number: PCT/KR2012/004123
(87) International publication number: WO 2012/161534

(56) References cited:
- WO-A1-94/00861
- JP-A- 2001 047 054
- JP-A- 2008 132 466
- KR-A- 20110 050 994
- KR-Y1- 200 327 037
- US-A1- 2005 029 124
- US-A1- 2010 065 511

## Description

### Technical Field

The present invention relates to an apparatus and method for controlling total dissolved solids, and a water treatment apparatus including the apparatus for controlling total dissolved solids.

Water treatment apparatuses may be used to treat water or wastewater and produce ultra-pure water, and may be used for various purposes such as industrial purposes and home purposes (including business purposes). However, the present invention particularly relates to water treatment apparatuses that are used to produce drinking water. Since water treatment apparatuses for producing drinking water receive raw water (or water), filter the raw water, and generate purified water for drinking, they will be referred to as water purifiers in a narrow sense. Such water purifiers may be configured to receive raw water (or water), filter the raw water with a filtering unit, and supply normal-temperature purified water to users, and may also be configured to heat or cool the normal-temperature purified water and supply hot water or cold water to users.

Among the water treatment apparatuses for producing drinking water, there are functional water generators that supply a variety of types of functional water, such as ionized water, carbonated water, and oxygenated water, as well as purified water. In addition, there are water heaters, water coolers, ice makers and the like that primarily filter water received from a water supply unit such as a water tank, and then heat/ cool/freeze the filtered water. In this specification, the term "water treatment apparatus" is used as a general term for a water purifier, a functional water generator, a water heater, a water cooler, an ice maker, and any apparatus having at least one of the functions thereof. Although typical water purifiers (including water ionizers) are exemplified for the convenience of description, such water purifiers should be understood as merely examples of water treatment apparatuses according to embodiments of the present invention.

### Background Art

In general, water purifiers are classified into ultra filtration (UF) membrane water purifiers and reverse osmosis (RO) membrane water purifiers, depending on the water purifying method carried out thereby.

Among them, the RO membrane water purifier has been known as being superior to other water purifying schemes in terms of removing pollutants.

The RO membrane water purifier may include a filtering unit including a sediment filter that receives raw water from a hydrant and removes dust particles, dregs, various suspended bodies, and the like, through 5-micron fine filters; a pre-carbon filter that removes carcinogens (e.g., trihalomethane (THM)), synthetic detergents, harmful chemicals (e.g., insecticides), residual chlorine components, and the like, by activated carbon adsorption; an RO membrane filter that includes a 0.0001-micron RO membrane, removes heavy metals (e.g., lead and arsenic), sodium, various germs, and the like, and discharges concentrated water through a drain pipe; and a post-carbon filter that removes unpleasant odors, tastes, and colors contained in water having passed through the RO membrane filter.

The UF membrane water purifier uses a UF membrane filter instead of an RO membrane filter. The UF membrane filter is a porous filter having tens to hundreds of nanometer (nm) pores, which removes pollutants in water through numerous fine pores that are distributed on a membrane surface.

However, typical RO membrane water purifiers not only remove heavy metals contained in raw water, but also various mineral components contained therein, thus failing to satisfy the desire of users to take minerals. Typical UF membrane water purifiers have lower filtration performances than typical RO membrane water purifiers, thus failing to satisfy the desire of users for pure water (ultra-pure water).

Furthermore, typical RO membrane water purifiers should discharge concentrated water (live water), which has failed to pass through an RO membrane, thus causing a serious waste of water.

Moreover, typical RO membrane water purifiers or typical UF membrane water purifiers require high maintenance costs because RO membrane filters or UF membrane filters have relatively short lifetimes and replacement periods. Particularly, in regions where raw water contains a large amount of hard minerals such as metal ions, the lifetime of RO membrane filters or UF membrane filters is further reduced.

The US Patent Application US 2005/0029124 A1 describes an influent solution treating apparatus, e.g. for waste water treatment, which includes an electrochemical cell and variable voltage supply.

There is a need in the art for other improved water purifiers (water treatment apparatuses).

### Disclosure of Invention

### Technical Problem

The present invention provides a total dissolved solid controlling apparatus and method and a water treatment apparatus including the total dissolved solid controlling apparatus, which can simply and easily control a reduction rate of total dissolved solids (a removal rate of dissolved solids (ionized materials)) by current control.

### Solution to Problem

According to the present invention there is provided a total dissolved solid (TDS) controlling apparatus comprising: a filtering unit including a deionizing filter removing dissolved solids from inflow raw water by an input current; and a control unit controlling the input current such that water discharged from the deionizing filter corresponds to target total dissolved solids,wherein the control unit comprises: a determiner determining total dissolved solids contained in raw water having flowed into the deionizing filter, by using an input current; and an input current determiner compares the determined total dissolved solids with the target total dissolved solids, and determines an input current applied to the deionizing filter, based on the comparison results;an input current supplier applies a predetermined fixed voltage to the deionizing filter, and supplies the input current to the deionizing filter by pulse width modulation (PWM); and a flow rate sensor measuring a flow rate of raw water flowing into the deionizing filter, wherein the input current determiner determines the input current applied to the deionizing filter, based on the comparison results of the determined total dissolved solids and the target total dissolved solids, and the flow rate of raw water measured by the flow rate sensor.

The determiner may determine the total dissolved solids of the inflow raw water, based on a table in which the flow rate of raw water and the voltage and current applied to the deionizing filter are described in connection with the total dissolved solids.

The deionizing filter may remove dissolved solids from water by at least one of electrodialysis (ED), electrodeionization (EDI), and capacitive deionization (CDI).

According to another aspect of the present invention, there is provided a total dissolved solid (TDS) controlling method comprising: applying a predetermined fixed voltage to a deionizing filter; removing dissolved solids from raw water flowing into the deionizing filter, by using the applied fixed voltage; measuring a flow rate of the raw water flowing into the deionizing filter; measuring an amplitude of a current flowing in the deionizing filter by the applied fixed voltage; determining total dissolved solids in the raw water by using the measured amplitude of the current; comparing the determined total dissolved solids with target total dissolved solids, and determining a current to be applied to the deionizing filter, based on the comparison results of the determined total dissolved solids and the target total dissolved solids, and the measured flow rate of the raw water; and applying the determined current to deionizing filter by pulse width modulation (PWM).

The determining of the amplitude of the current may determine a current applied to the deionizing filter, based on a table in which the flow rate of raw water and the voltage and current applied to the deionizing filter are described in connection with the total dissolved solids.

The determining of the total dissolved solids in the raw water may determine the total dissolved solids of the inflow raw water, based on a table in which the flow rate of raw water and the voltage and current applied to the deionizing filter are described in connection with the total dissolved solids.

The deionizing filter may remove dissolved solids from water by at least one of electrodialysis (ED), electrodeionization (EDI), and capacitive deionization (CDI).

According to another aspect of the present invention, there is provided a water treatment apparatus including the above total dissolved solid (TDS) controlling apparatus.

### Advantageous Effects of Invention

According to exemplary embodiments of the present invention, total dissolved solids removed by a deionizing filter and/or a reduction rate of the total dissolved solids is/are controlled by an application of power. Accordingly, it is possible to supply various types of water that are different in terms of the content of total dissolved solids thereof, such as mineral water and ultra-pure water, in compliance with the demand of users. In particular, ultra-pure water or mineral water can be selected, so that desired water can be provided according to user selection. Also, even in the case of cold water, hot water, and/or ice, desired water such as mineral water or ultra-pure water can be provided according to user selection.

According to exemplary embodiments of the present invention, when a current control is used to drive a deionizing filter, total dissolved solids contained in raw water or water filtered in the deionizing filter can be determined (measured) without using a separated sensor. In addition, since the total dissolved solids are controlled in consideration of the flow rate of raw water, filtered water having desired levels can be supplied to users.

In particular, since a water treatment apparatus controlling method and a total dissolved solid controlling apparatus and method according to exemplary embodiments of the present invention use a current-control scheme, they have a simple configuration, a low error rate, and a high feedback speed as compared to the case of using a voltage-controlled scheme.

Also, since a water treatment apparatus controlling method and a total dissolved solid controlling apparatus and method according to exemplary embodiments of the present invention use a current-control scheme, they can determine total dissolved solids in raw water without using a separate sensor and can control a reduction rate of the total dissolved solids accordingly.

According to exemplary embodiments of the present invention, since the level of compensation depending on the flow rate of raw water is considered, a user can obtain water containing total dissolved solids at a desired level, such as mineral water or ultra-pure water.

### Brief Description of Drawings

The above and other aspects, features and other advantages of the present invention will be more clearly understood from the following detailed description taken in conjunction with the accompanying drawings, in which:
FIG. 1 is a flow passage configuration diagram illustrating a configuration of a water treatment apparatus illustrating the present invention;
FIG. 2 is a flow passage configuration diagram illustrating a flow passage for generating purified water in the water treatment apparatus illustrated in FIG. 1;
FIG. 3 is a flow passage configuration diagram illustrating a flow passage for recycling a deionizing filter in the water treatment apparatus illustrated in FIG. 1;
FIG. 4 is a flow passage configuration diagram illustrating a configuration of a water treatment apparatus illustrating the present invention;
FIG. 5 is a flow passage configuration diagram illustrating a flow passage for generating purified water in the water treatment apparatus illustrated in FIG. 4;
FIG. 6 is a flow passage configuration diagram showing a flow passage for recycling a deionizing filter in the water treatment apparatus illustrated in FIG. 4;
FIG. 7 is a flow passage configuration diagram illustrating a configuration of a water treatment apparatus for illustrating the present invention;
FIG. 8 is a flow passage configuration diagram illustrating a configuration of a water treatment apparatus according to a modified example of the exemplary embodiment of the present invention illustrated in FIG. 7;
FIG. 9 is a graph illustrating a mineral removal performance depending on a voltage;
FIG. 10 is a graph illustrating toxic heavy metal removal performance depending on voltage;
FIG. 11 is a functional block diagram illustrating a main configuration involved in controlling total dissolved solids according to the present invention;
FIG. 12 is a functional block diagram illustrating a control unit according to a preferred embodiment of the present invention;
FIG. 13 is a table in which a flow rate of raw water, a voltage applied to a filtering unit, and the like are described in connection with total dissolved solids according to an exemplary embodiment of the present invention;
FIG. 14 is a flow chart illustrating a method for controlling a water treatment apparatus according to the present invention; and
FIG. 15 is a flow chart illustrating a deionizing filter driving process illustrated in FIG. 14.

### Best Mode for Carrying out the Invention

The terms used in this specification are used for describing specific embodiments and do not limit the scope of the present invention. A singular expression may include a plural expression, as long as they are obviously different from each other in context.

It will be understood that when an element is referred to as being "connected" to another element, it may be directly connected to the other element or may be indirectly connected to the other element with element(s) interposed therebetween. Unless explicitly described to the contrary, the terms "include" and "have" will be understood to imply the inclusion of stated elements but not the exclusion of any other elements.

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In describing the present invention, if detailed descriptions of related known functions or configurations are considered to unnecessarily divert the gist of the present invention, such descriptions will be omitted. Like reference numerals will be used to denote like elements throughout the specification. In the drawings, the shapes and sizes of elements and the distance between elements may be exaggerated for clarity of illustration.

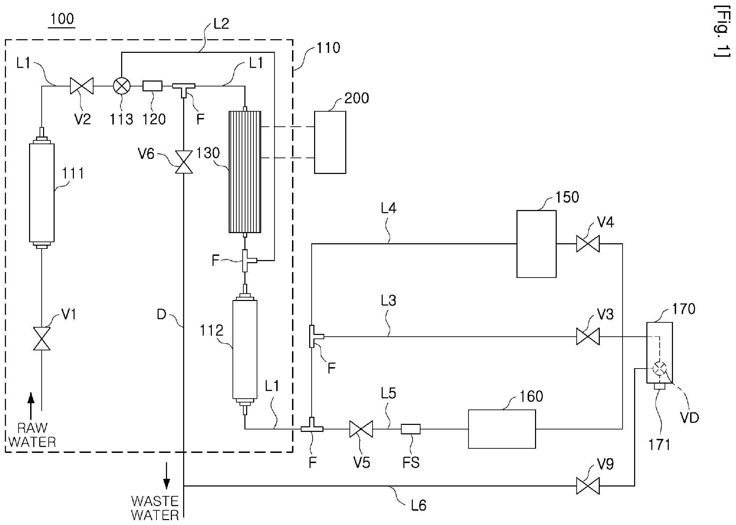

First, a water treatment apparatus 100 for use with the present invention will be described with referenced to FIGS. 1 through 6.

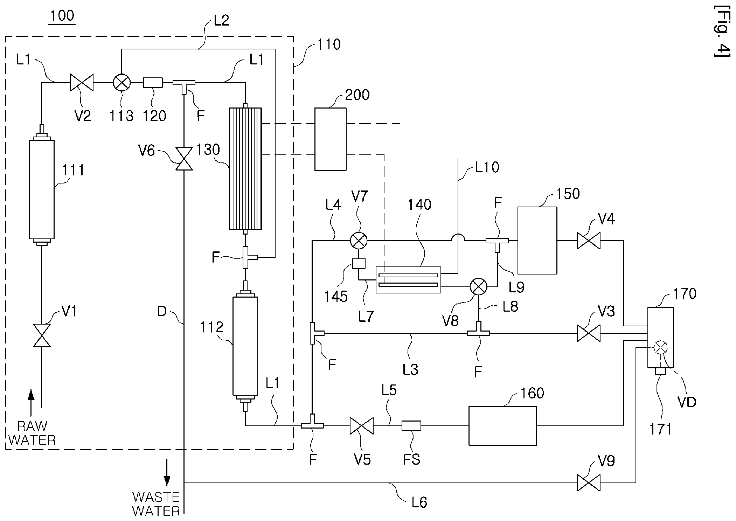

As illustrated in FIGS. 1 through 6, the water treatment apparatus 100 may include a filtering unit 110 including a deionizing filter 130, a water output unit 170 outputting water filtered by the filtering unit 110, and a control unit 200 controlling power applied to the deionizing filter 130. The water treatment apparatus 100 may further include a cooling unit 150 and a heating unit 160 changing the temperature of water extracted, and a display unit (not illustrated) displaying an operation status of the water treatment apparatus 100 by light or sound. In addition, as illustrated in FIGS. 4 through 6, a water treatment apparatus 100 may further include an ionized water generating unit 140 generating ionized water by using water filtered by the filtering unit 110.

The filtering unit 110 may sequentially filter and purify raw water. The filtering unit 110 may include a sediment filter, a pre-carbon filter, a deionizing filter 130, and a post-carbon filter 112. If the filtering unit 110 includes a deionizing filter 130, the types, the number and the order of filters may vary depending on the filtering performance of a water treatment apparatus (water purifier). In addition, as illustrated in FIGS. 1 through 6, a hybrid filter 111 composed of a sediment filter and a pre-carbon filter may be included, and a variety of types of functional filters may be added or substituted.

The sediment filter may receive raw water from a raw water supply unit, and adsorb and remove relatively large suspended particles and solids (e.g., sand particles) contained in the raw water. The pre-carbon filter may receive water filtered by the sediment filter, and remove harmful chemicals (e.g., volatile organic compounds, carcinogens, synthetic detergents, and insecticides) and residual chlorine components contained in the water, by activated carbon adsorption. Although FIGS. 1 through 6 illustrate that the sediment filter and the pre-carbon filter are included in the hybrid filter 111, the sediment filter and the pre-carbon filter may be installed separately from each other.

Meanwhile, a raw water feed valve V2 for selectively shutting off raw water supplied from a raw water supply unit may be installed at a rear end of the hybrid filter 111. However, the installation position of the raw water feed valve V2 is not limited thereto as long as the raw water feed valve V2 can shut off the supply of the raw water. For example, the raw water feed valve V2 may also be installed at a front end of the hybrid filter 111. In addition, as illustrated in FIGS. 1 through 6, a pressure reducing valve V1 may be installed to maintain the pressure of raw water, which flows in from the filtering unit 110, at a predetermined level.

In addition, the post-carbon filter 112 may adsorb and remove an unpleasant taste, odor or color from water filtered by the deionizing filter 130. Purified water filtered by the post-carbon filter 112 may be supplied through the water output unit 170 to a user. In this case, other complex functions may be added to the post-carbon filter 112, or other additional filters may be added to the post-carbon filter 112.

In addition, the deionizing filter 130 provided to remove (including the meanings of filtering off, adsorption, and separation from water) dissolved solids may be provided between the hybrid filter 111 and the post-carbon filter 112; however, the present invention is not limited thereto. For example, the deionizing filter 130 may be used together with other filters, or the deionizing filter 130 may be solely provided in the filtering unit 110.

The deionizing filter 130 may reduce total dissolved solids (TDS), which is contained in water flowed therein, by an application of power thereto. That is, the deionizing filter 30 may be configured to remove (separation from water) dissolved solids (ionized materials), which are contained in water, by electricity. The term total dissolved solids (TDS) is also used to imply the amount of solids that are dissolved in water and contain mineral components such as calcium, sodium, magnesium, and iron, which is expressed in units of mg/ℓ or ppm. In this manner, the total dissolved solids imply the total amount of dissolved solids, which exist as ionized materials in general.

For example, the deionizing filter 130 may be configured to remove dissolved solids (ionized materials), which are contained in water, by any one of electrodialysis (ED), electrodeionization (EDI), and capacitive deionization (CDI). However, the deionizing filter 130 is not limited thereto as long as the deionizing filter 130 can remove dissolved solids (ionized materials) by power that is applied to a positive electrode and a negative electrode thereof. For example, the deionizing filter 130 may be configured such that an ion exchange resin is adhered or applied to a membrane and electricity is applied to the membrane. In this case, the dissolved solids removed by the deionizing filter 130 are generally ionized materials. Therefore, in the specification including the claims of the present invention, the meaning of removing dissolved solids includes the meaning of removing ionized materials.

Meanwhile, EDI performs deionization (desalination) by direct current (DC) electricity, which is also referred to as membrane deionization (MDI) or continuous electrodeionization (CEDI). In this specification, EDI is described as including MDI and CEDI.

The deionizing filter 130 removes dissolved solids (ionized materials) from water by an application of power. Accordingly, total dissolved solids are reduced in water that has passed through the deionizing filter 130. The control of total dissolved solids by the deionizing filter 130 may be performed by the control unit 200. That is, the control unit 200 may control power applied to the deionizing filter 130, so that total dissolved solids in water filtered by the deionizing filter 130, or a reduction rate of total dissolved solids by the deionizing filter 130 may be controlled.

In this case, the control unit 200 may control power applied to the deionizing filter 130, so that the type of water depending on total dissolved solids in water filtered by the deionizing filter 130, or the type of water depending on a reduction rate of total dissolved solids by the deionizing filter 130 may be divided in at least two stages prior to output.

For example, the control unit 200 may control power applied to the deionizing filter 130, so that mineral water generated by removing total dissolved solids from raw water at a predetermined level, and ultra-pure water containing less total dissolved solids than the mineral water may be output. However, the division of water depending on total dissolved solids or a reduction rate of total dissolved solids may be subdivided in addition to mineral water and ultra-pure water.

For example, the mineral water may correspond to water whose reduction rate of total dissolved solids by the deionizing filter 130 is equal to or greater than about 30% and less than about 80%, in comparison with water (or raw water) that has not flowed into the deionizing filter 130, and the ultra-pure water may correspond to water whose reduction rate of total dissolved solids by the deionizing filter 130 is equal to or greater than about 80%. In this manner, the reduction rate of total dissolved solids corresponding to the mineral water or the ultra-pure water may be selected directly by a user. However, the reduction rate of total dissolved solids corresponding to the mineral water or the ultra-pure water may also be preset to a predetermined range or a predetermined value prior to prior to product launch. For example, the reduction rate of total dissolved solids (dissolved solid reduction rate) by the deionizing filter 130 in the case of the ultra-pure water may be set to about 90%, and the reduction rate of total dissolved solids by the deionizing filter 130 in the case of the mineral water may be set to about 50%.

Meanwhile, in a case in which the ionized water generating unit 140 is included as illustrated in FIGS. 4 through 6, mineral water containing a large amount of minerals (total dissolved solids) may be supplied to the ionized water generating unit 140 so that the ionized water generating unit 140 can efficiently generate alkali water or acid water having a desired pH even by low-power (low-current) driving. To this end, when ionized water (alkali water) is selected, the control unit 200 may control power applied to the deionizing filter 130, so that total dissolved solids of an amount corresponding to mineral water are contained in water.

In addition, opposite-polarity power may be applied to the deionizing filter 130 to perform a recycling process.

To this end, a recycling flow passage L2 separated from a purified water flow passage L1 may be installed in the filtering unit 110 of the water treatment apparatus 100.

The recycling flow passage L2 may supply inflow raw water to an output side of the deionizing filter 130. Specifically, the recycling flow passage L2 may be branched from a recycling flow passage switch valve 113 and connected to a connection unit F that is located at an output side of the deionizing filter 130. In addition, recycling water flowing through the deionizing filter 130 in a reverse direction may be drained through a drain pipe D. In this case, a recycling feed valve V6 may be installed in the drain pipe D. The recycling feed valve V6 may be closed in a water purifying mode and opened in a recycling mode so that water having passed through the hybrid filter 111 is not drained through the drain pipe D in a purified water generating mode.

In addition, a flow rate sensor 120 is installed at a front end of the deionizing filter 130 so that a flow rate of water flowing into the deionizing filter 130 may be measured to control total dissolved solids removed by the deionizing filter 130 or a reduction rate of the total dissolved solids.

The flow rate sensor 120 may be installed at a front end of the connecting unit F that connects the purified water flow passage L1 and the drain pipe D. That is, the drain pipe D may be connected to the purified water flow passage L1 between the flow rate sensor 120 and the deionizing filter 130, so that no water passes through the flow rate sensor 120 in a recycling mode. Accordingly, when a flow through the flow rate sensor 120 is detected in a recycling mode of the deionizing filter 130, it may be determined that there is a problem in switching a flow passage by the recycling flow passage switch valve 113. When it is determined by the flow rate sensor 120 that there is a problem in performing a recycling mode, the control unit 200 may display a malfunction of the recycling mode by light or sound through a display unit (not illustrated). Accordingly, the installation position of the flow rate sensor 120 may be controlled such that the deionizing filter 130 can be prevented from malfunctioning due to a recycling failure.

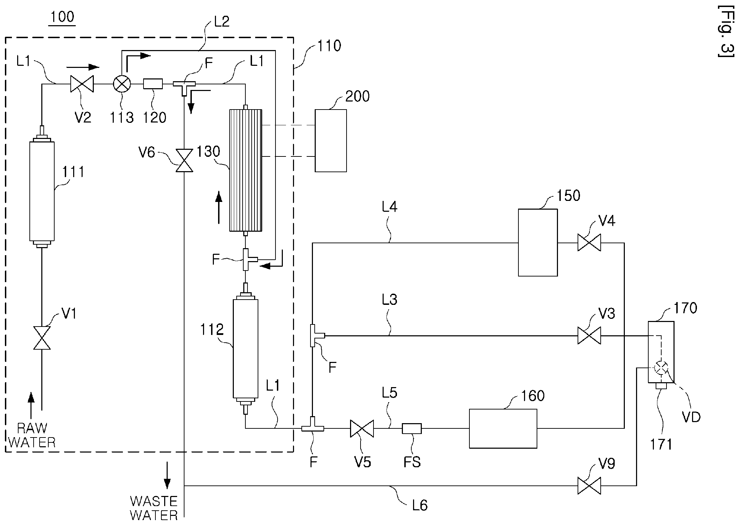

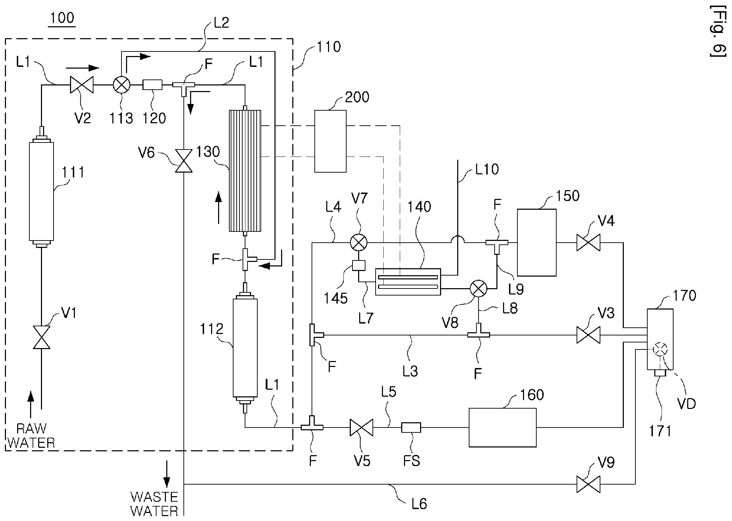

In the recycling mode, a flow passage is formed along arrows illustrated in FIGS. 3 and 6. That is, when the recycling flow passage switch valve 113 switches a flow passage such that the purified water flow passage L1 and the recycling flow passage L2 communicate with each other, raw water flows through the recycling flow passage switch valve 113 into the recycling flow passage L2. The raw water having flowed into the recycling flow passage L2 flows into an output side of the deionizing filter 130, passes the deionizing filter 130 in the reverse direction, and drains through the connection unit F connected to the drain pipe D, through the recycling feed valve V6, and through the drain pipe D. In the recycling mode, opposite-polarity power is applied to the deionizing filter 130.

Then, when a purified water extracting valve V3 is opened by a purified water extracting selection of a user, water having total dissolved solids controlled by a filtering operation of the filtering unit 110 is discharged through a normal-temperature water flow passage L3 to the water output unit 170.

Meanwhile, water treatment apparatus 100 may include at least one of the cooling unit 150 and the heating unit 160 in order to change the temperature of water filtered by the filtering unit 110.

In order to supply water through the cooling unit 150 or the heating unit 160, the cooling unit 150 may be installed at a cold water flow passage L4, and the heating unit 160 may be installed at a hot water flow passage L5. Water may be extracted from the cooling unit 150 when a cold water extracting valve V4 is opened; and water may be extracted from the heating unit 160 when a hot water extracting valve V5 is opened.

The drawings of the specification illustrate electronic valves that are automatically opened by user selection to extract water through the water output unit 170. However, mechanical valves may be used instead of such electronic valves.

Meanwhile, FIGS. 1 through 3 illustrate that the normal-temperature water flow passage L3, the cold water flow passage L4, and the hot water flow passage L5 are merged together such that water is discharged through one extracting port 171 provided in the water output unit 170. However, the number of extracting ports 171, the flow passage configuration at a front side of the water output unit 170, and the flow passage configuration in the water output unit 170 may vary according to various embodiments.

For example, the cooling unit 150 may include a cold water tank, and the heating unit 160 may include a heating tank. As another example, the cooling unit 150 may include an instant cooling device that cools water supplied by the water pressure of raw water, and the heating unit 160 may include an instant heating device that heats water supplied by the water pressure of raw water. When a direct water cooling unit 150 and/ or a direct water heating unit 160 using the water pressure of a raw water is used as above, the propagation of bacteria or microorganisms in water stored in a relevant tank can be prevented, and the size and manufacturing costs of a water treatment apparatus 100 can be reduced because it is not necessary to install a relevant tank.

In addition, a drain flow passage switch valve VD may be installed in the water output unit 170 or at the front end of the water output unit 170 so that water output from the heating unit 160 may be discharged through the drain pipe D or through the extracting port 171 of the water output unit 170. To this end, the drain flow passage switch valve VD may be installed to switch a flow passage such that the output side of the heating unit 160 communicates with the drain pipe D or the extracting port 171. As with the driving of other valves, the driving of the drain flow passage switch valve VD may be controlled by the control unit 200.

In this case, the control unit 200 may switch a flow passage of the drain flow passage switch valve VD such that the output side of the heating unit 160 may be connected through a drain flow passage V7 to the drain pipe D during a predetermined period of time to drain water remaining in the instant heating unit 160. That is, when the valves connected to the heating unit 160, such as the raw water feed valve V2, are opened, water filtered by the filtering unit 110 flows into the heating unit 160 to discharge water remaining in the heating unit 160, so that air in the heating unit 160 can be removed. In this manner, by removal of residual water in the heating unit 160, the damage of the heating unit 160 caused by bubbles can be prevented. In this case, a check valve V9 may be installed in the drain flow passage V7 such that water flowing through the drain flow passage V7 does not flow backward.

Meanwhile, the heating unit 160 may be driven after removal of residual water in the heating unit 160 during a predetermined period of time (for example, 1 to 2 seconds), so that the temperature of water output from the heating unit 160 can be increased, and the flow passage in the water output unit 170 and the flow passage connected to the water output unit 170 may be sterilized using such hot water. That is, the heating unit 160 may be driven under the control of the control unit 200 during at least a portion (for example, a period to the end of drainage after the lapse of about 1 to 1.5 seconds) of a period of time (for example, about 2 to 3 seconds) when water remaining in the heating unit 160 is drained through the drain pipe P, so that a flow passage provided in the water output unit 170 may be sterilized.

For example, the sterilization of the water output unit 170 by the heating unit 160 may be performed at the time of outputting hot water. As another example, the sterilization of the water output unit 170 by the heating unit 160 may be performed by user selection or may be automatically performed at predetermined periods. Meanwhile, a heating amount (power supply amount) of the heating unit 160 may be controlled based on a flow rate measured by a flow rate sensor FS provided in a front end of the heating unit 160, so that the temperature of water heated and output by the heating unit 160 may be effectively controlled.

Meanwhile, as illustrated in FIGS. 4 through 6, water treatment apparatus 100 may further include an ionized water generating unit 140.

The ionized water generating unit 140 may generate acid water or alkali water when power is applied to electrodes provided therein.

As with a typical ice maker or an ice water purifier, the ice making unit 195 may generate ice. A detailed method and configuration of the ice making unit 195 for generating ice is not specifically limited as long as the ice making unit 195 can receive water and generate ice. In addition, ice generated by the ice making unit 195 may be stored in an ice storage space (not illustrated) prior to being supplied to a user.

The sterilized water generating unit 192 may generate sterilized water containing sterilizing materials when power is applied to electrodes thereof.

For example, the sterilized water generating unit 192 may be configured to electrolyze (in this specification, "electrolysis" will be described as including "redox reaction") inflow water and generate sterilized water containing a material having a sterilizing function, such as a mixed oxidant (MO).

The sterilized water generating unit 192 may sterilize or extinguish microorganisms or bacteria remaining in water by passing water between electrodes of different polarities. In general, sterilization of purified water by electrolysis may be performed by a combination of a direct redox reaction that directly oxidizes microorganisms at a positive electrode, and an indirect redox reaction that oxidizes microorganisms by a variety of types of mixed oxidants (for example, residual chorine, ozone, OH radical, and oxygen radicals) that may be generated at a positive electrode.

In this manner, water having flowed into the sterilized water generating unit 192 may move to the ice making unit 195 while containing mixed oxidants. In this case, since water having flowed into the ice making unit 195 is used to generate ice, it may be necessary to control power applied to the electrodes of the sterilized water generating unit 192, so that sterilized drinking water containing mixed oxidants with a concentration, which is drinkable by a user, may be supplied to the ice making unit 195.

Therefore, sterilized drinking water containing mixed oxidants is generated by the sterilized water generating unit 192, and the sterilized drinking water is used to generate ice in the ice making unit 195. Accordingly, unpolluted ice can be supplied to a user, and the pollution of ice by bacteria can be minimized even when the ice is stored in an ice storage space (not illustrated) for a long period of time.

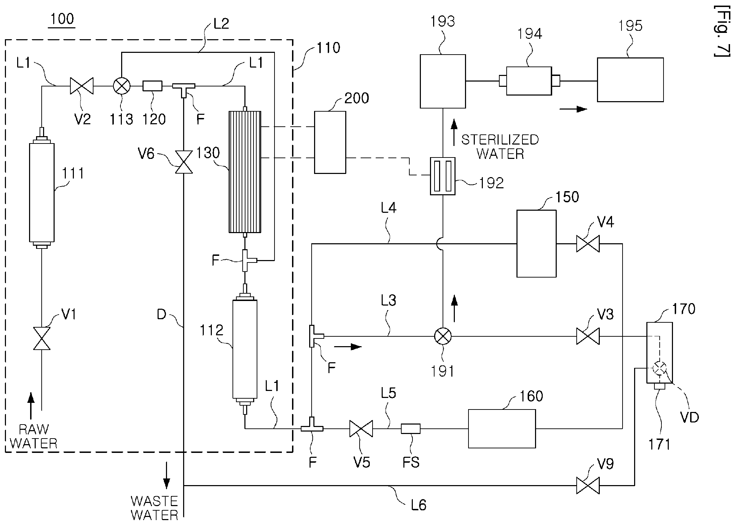

In addition, as illustrated in FIG. 7, water treatment apparatus 100 may further include a storage tank for storing water filtered by the filtering unit 110. In this case, mixed oxidants generated by the sterilized water generating unit 192 (specifically, sterilized water containing mixed oxidants) may be supplied to the storage tank 193, and the ice making unit 195 may be configured to receive sterilized drinking water containing the mixed oxidants stored in the storage tank 193 and generate ice.

For example, the storage tank 193 may include a normal-temperature storage tank. As another example, the storage tank 193 may include a cold water tank so that the ice making unit 195 can rapidly perform an ice making operation.

When the storage tank 193 is provided as above, the concentration (amount) of mixed oxidants generated by the sterilized water generating unit 192 may be controlled such that the mixed oxidants generated by the sterilized water generating unit 192 may be diluted with the water stored in the storage tank 193, to generate sterilized drinking water having a predetermined concentration.

When the storage tank 193 is provided as above, water supplied to the ice making unit 195 is prestored. Therefore, in this case, the time taken to supply water to the ice making unit 195 can be reduced as compared to a case in which water having passed through the filtering unit 110 is directly supplied to the ice making unit 195.

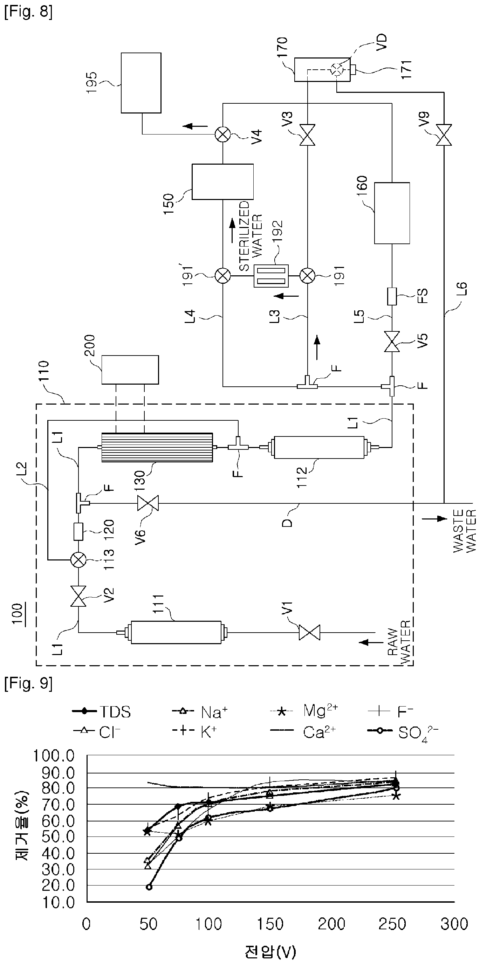

Meanwhile, a water treatment apparatus 100 according to an exemplary embodiment of the present invention includes a normal-temperature water tank at the normal-temperature flow passage L3 or includes a cold water tank at the cooling unit 150 as illustrated in FIG. 8. In this case, the storage tank 193 may include a normal-temperature water tank or a cold water tank. In addition, the sterilized water generating unit 192 may be provided on an inflow side of the cold water tank and configured to supply mixed oxidants to the normal-temperature water tank or the cold water tank.

When the storage tank 193 is provided as above, sterilized drinking water containing mixed oxidants can be supplied through the sterilized water generating unit 192 to the storage tank 193. Accordingly, the propagation of bacteria or microorganisms in water stored in the storage tank 193 can be prevented. Therefore, ice can be generated using unpolluted, clean water. In addition, sine the ice making unit 195 generates ice by using sterilized drinking water containing a small amount of mixed oxidants, the propagation of bacteria or microorganisms in the ice can be prevented even when the ice is stored in an ice storage space for a long period of time.

Meanwhile, as illustrated in FIG. 7, water treatment apparatus 100 may further include a chlorine removing filter 194 that is provided at a rear end of the storage tank 193 to remove chlorine components contained in the sterilized drinking water.

When the chlorine removing filter 194 is provided as above, chlorine components contained in the sterilized drinking water stored in the storage tank 193 can be removed. Accordingly, odors or tastes caused by chlorine components can be removed, thus eliminating an unpleasant sensation that may be experienced by a user. Meanwhile, in a case in which water filtered the chlorine removing filter 194 is supplied to the ice making unit 195, the effect of preventing the propagation of bacteria or microorganisms in ice may be low, as compared to a case in which water is not filtered by the chlorine removing filter 194. However, since water, which has few bacteria or microorganisms due to the mixed oxidants present in the storage tank 193, is supplied to the ice making unit 195, an ice storage space time can be increased as compared to the case of ice generated by a typical ice maker.

Meanwhile, as illustrated in FIG. 8, water treatment apparatus 100 may be configured such that mixed oxidants generated by the sterilized water generating unit 192 may pass through the cooling unit 150 and cooled water may be supplied to the ice making unit 195. In this case, a current/voltage applied to the sterilized water generating unit 192 may be controlled such that sterilized water containing mixed oxidants generated by the sterilized water generating unit 192 can be used as sterilized drinking water.

In FIGS. 7 and 8, reference numerals 191 and 191' denotes a flow passage switch valve that is configured to switch a flow passage such that water filtered by the filtering unit 110 can be supplied to the ice making unit 195. In FIG. 3, V4 denotes a flow passage switch valve that is configured to switch a flow passage between a flow passage for extraction of cold water and a flow passage connected to the ice making unit 195.

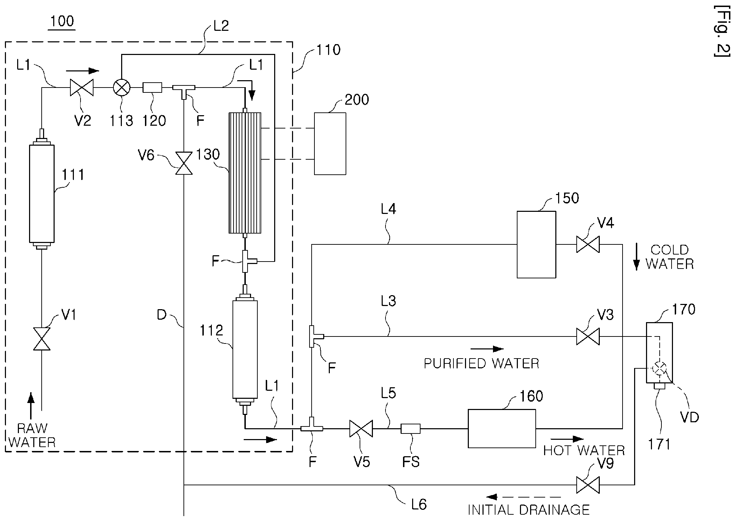

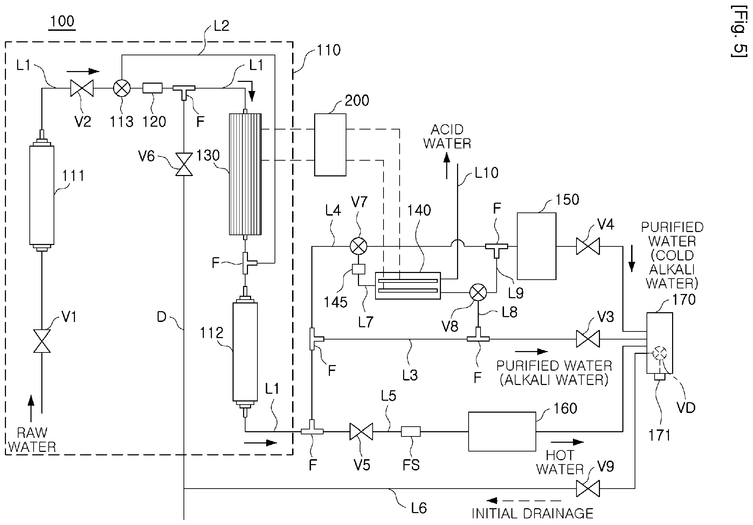

Meanwhile, in a typical water purifying mode of the water treatment apparatus 100, purified water is extracted along arrows in FIGS. 2 and 5. That is, water having passed through the purified water flow passage L1 may be discharged at a normal temperature through the normal-temperature water flow passage L3, may be cooled and discharged through the cold water flow passage L4, and may be heated and discharged through the hot water flow passage L5. In addition, as described above, when hot water is extracted, water remaining in the heating unit 160 may be initially drained as represented by a dotted arrow.

In this case, water extraction after the passage of the hot water flow passage L5 may be performed according to user selection. In this manner, extracted water may have a plurality of types depending on total dissolved solids (or reduction rate). For example, water may be extracted as mineral water or ultra-pure water, and mineral water may be subdivided into a high-concentration type and a low-concentration type.

If a user selects mineral water or ultra-pure water, water having total dissolved solids of an amount corresponding to mineral water or ultra-pure water, or water having a reduction rate of total dissolved solids corresponding to mineral water or ultra-pure water may be output. In this case, mineral water or ultra-pure water may be discharged through the normal-temperature water flow passage L3, the cold water flow passage L4 or the hot water flow passage L5 and through the water extracting port 171 of the water output unit 170. In this case, the water output unit 170 may have a plurality of water output ports having different functions, and may have one water output port as illustrated in FIG. 1, which are all included in the scoped of the present invention.

In this manner, water treatment apparatus 100 can output various types of extracted water with different total dissolved solids (or reduction rate), and can extract various types of water in various temperatures, thus satisfying various desires of users.

Meanwhile, when the ionized water generating unit 140 is provided as illustrated in FIGS. 4 and 5, purified water having passed through the filtering unit 110 may be supplied through the flow passage switch valve V7 and an inflow passage L7 to the ionized water generating unit 140. The water supplied to the ionized water generating unit 140 may be divided into alkali water and acid water. The alkali water may be extracted as normal-temperature alkali water through a normal-temperature alkali water flow passage L8 and the water output unit 170, or may be extracted as cold alkali water through a cold alkali water flow passage L9 and the water output unit 170. The acid water may be drained through an acid water flow passage L10 to the outside. In this case, the acid water flow passage L10 may be connected to the drain pipe D. However, the acid water flow passage L10 may be extracted through a separate extraction unit and used for other purposes such as cleaning. In this case, in order to implement a desired pH of ionized water, water supplied to the ionized water generating unit 140 may have a sufficient amount of total dissolved solids. Accordingly, when the extraction of ionized water is selected, the control unit 200 may control the power (current or voltage) applied to the deionizing filter 130, such that total dissolved solids (or a reduction rate thereof) corresponding to mineral water is implemented in the deionizing filter 130 and mineral water is supplied to the ionized water generating unit 140.

Hereinafter, an operation of controlling total dissolved solids removed by the deionizing filter 130 will be described in detail.

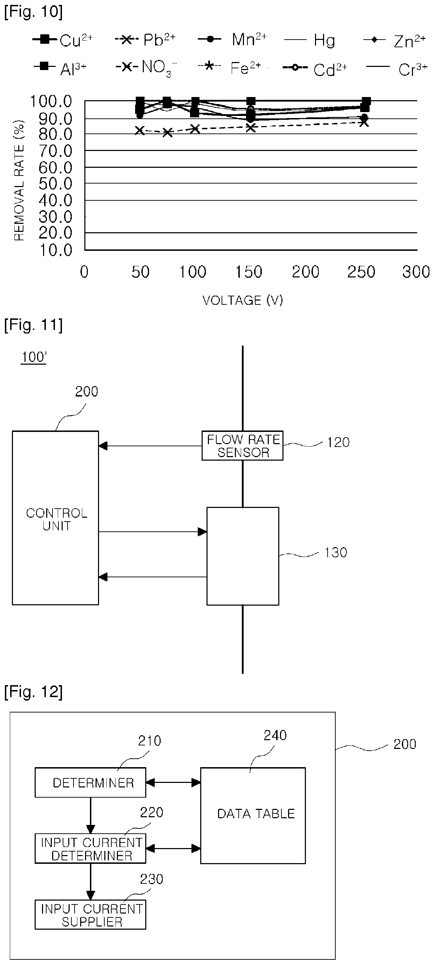

FIG. 9 is a graph illustrating an ion removal performance depending on a voltage, and FIG. 10 is a graph illustrating toxic heavy metal removal performance depending on voltage. Specifically, FIG. 9 is a graph illustrating the performance of removing ions in raw water by electrodeionization, depending on an applied voltage, and FIG. 10 is a graph illustrating the performance of removing toxic heavy metals in raw water by electrodeionization, depending on an applied voltage. Experiments of FIGS. 9 and 10 were performed after the deionizing filter 130 is recycled. On the condition that a TDS concentration of raw water was 320 ppm and a flow rate was 1 LPM (liter/min), measurements were performed while changing a voltage condition from 50 V to 260 V.

It can be seen from FIG. 10 that while an applied voltage changes from 50 V to 260 V, almost all of the toxic heavy metals are removed (a toxic heavy metal removal performance is a rate of 90% to 100%). In addition, it can be seen that the toxic heavy metal removal performance is not greatly affected by the amplitude of an applied voltage, and almost all of the heavy metals contained in raw water are removed.

On the other hand, it can be seen from FIG. 9 that while an applied voltage changes from 50 V to 260 V, the removal performance with respect to ions except the toxic heavy metals (i.e., useful mineral ions) rapidly increases with an increase in the applied voltage. In addition, it can be seen that while an applied voltage changes from 50 V to 260 V, a reduction rate of total dissolved solids (TDS) gradually increases from 35% to 85%.

Accordingly, by controlling the amplitude of a voltage or a current applied to the deionizing filter 130, ultra-pure water (for example, a TDS (mineral) reduction rate is equal to or greater than 80%) or mineral water (for example, a TDS (mineral) reduction rate is equal to or greater than 30% and less than 80%) can be generated, and general purified water (for example, a TDS (mineral) reduction rate is less than 30%) can be generated.

In particular, as illustrated in FIG. 9, it can be seen that calcium ions are removed by more than 80% even when a low voltage is applied. Accordingly, as described above, when the ionized water generating unit (electrolyzer) 140 is installed at the rear end of the deionizing filter 130, a scale generation in electrodes provided in the ionized water generating unit 140 can be significantly reduced and the lifetime of the electrodes provided in the ionized water generating unit 140 can be greatly increased.

As can be seen from FIGS. 9 and 10, by controlling a voltage applied to the deionizing filter 130, most of the toxic heavy metals can be removed, and the amount of mineral ions can be determined according to user preferences, so that mineral water or ultra-pure water can be extracted.

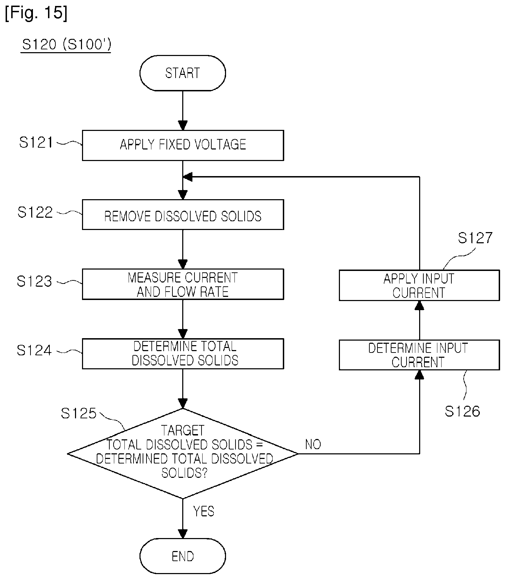

Accordingly, a total dissolved solid (mineral ion, ion materials) controlling apparatus (100' of FIG. 11) and a total dissolved solid controlling method (S100' of FIG. 15), which can determine the amount of mineral ions according to user preferences while removing most of the toxic heavy metals, may be considered based on the experiment examples of FIGS. 9 and 10.

That is, when a voltage applied to raw water is controlled between 50 V and 260 V, about 90% to 100% toxic heavy metals can be removed without being affected by a change in the amplitude of the voltage, as illustrated in FIG. 10, and the amount of mineral ions in the raw water can be determined as illustrated in FIG. 9.

Since a power supply unit (not illustrated) can have a voltage between 50 V and 260 V, the control of total dissolved solid removal by a voltage requires a voltage controlling device that can implement a change in the voltage. However, a voltage controlling device supporting a voltage control having a relatively large variation width of 50 V to 260 V is complex in configuration and requires an expensive circuit configuration cost.

Accordingly, as will later be described, the present invention provides a total dissolved solid controlling apparatus (100' of FIG. 11) and a total dissolved solid controlling method (S100' of FIG. 15), which can easily control the removal of total dissolved solids while removing almost all of the toxic heavy metals.

Referring to FIG. 11, a total dissolved solid controlling apparatus 100' according to the present invention includes a deionizing filter 130, a flow rate sensor 120, and a control unit 200.

As described above, the deionizing filter 130 may remove total dissolved solids (ionized materials), which are contained in raw water, by at least one of electrodialysis (ED), electrodeionization (EDI), and capacitive deionization (CDI). Herein, total dissolved solids removed by the deionizing filter 130 or a reduction rate of the total dissolved solids may be determined according to an input current applied to the deionizing filter 130. For the convenience of description, FIG. 11 illustrates that a total dissolved solid controlling apparatus 100' according to an aspect of the present invention includes only the deionizing filter 130. However, the total dissolved solid controlling apparatus 100' may further include other filters than the deionizing filter 130, such as a sediment filter, a pre-carbon filter, and a post-carbon filter.

Meanwhile, when electrodialysis is used to remove ions contained in raw water, the deionizing filter 130 may include an electrode and an ion exchange membrane.

Specifically, when the deionizing filter 130 applies an input current to raw water through an electrode, total dissolved solids (ionized materials) contained in raw water is moved by an electrical attraction force to a positive electrode or a negative electrode according to their polarity. Herein, since the positive electrode and the negative electrode are provided with an ion exchange membrane, only the total dissolved solids moved by the electrical attraction force may be connected/adsorbed to the ion exchange membrane. Accordingly, as described above, the deionizing filter 130 may remove ions from inflow raw water.

Unlike this, when electrodeionization is used to remove dissolved solids (ionized materials) contained in raw water, the deionizing filter 130 may include an electrode, an ion exchange membrane, and an ion exchange resin.

Specifically, an ion exchange resin filling a space between a positive ion exchange membrane and a negative ion exchange membrane may be used to collect/adsorb positive ions and negative ions in raw water that has flowed into the deionizing filter 130. Herein, when an input current is applied to the ion exchange membrane, the collection/adsorption of dissolved solids in raw water may be accelerated by an electrical attraction force. Since the dissolved solids in raw water are collected/ adsorbed by the ion exchange membrane as above, dissolved solids contained in inflow raw water can be removed by the deionizing filter 120.

In addition, unlike the electrodialysis and the electrodeionization, when capacitive deionization is used to remove ions contained in raw water, the deionizing filter 130 may not include an ion exchange membrane or an ion exchange resin. That is, the capacitive deionization may directly adsorb dissolved solids (ionized materials) and remove ions from raw water having flowed in the deionizing filter 130. Accordingly, the electrode of the deionizing filter 130 may be a porous carbon electrode that has small reactivity while having a wide surface area. The porous carbon electrode may be implemented by activated carbon. As compared to a variety of types of other porous carbon materials, the activated carbon has a good work capacity, a high specific surface area, and a high desorption/adsorption performance. Therefore, it may be more preferable to use the activated carbon as the electrode of the deionizing filter 130.

According to an exemplary embodiment of the capacitive deionization, when a voltage is applied to two porous carbon electrodes and raw water is flowed therebetween, the positive ions contained in the raw water may be adsorbed to the negative electrode, and the negative ions may be adsorbed to the positive electrode. In this case, the amount of ions adsorbed to the electrodes may be increased, so that the electrodes may be saturated. When the electrodes are saturated, opposite-polarity voltages may be applied to the respective electrodes. Then, the ions adsorbed to the electrodes may be desorbed by an electrical repulsion force. That is, opposite-polarity voltages may be applied to the electrodes to recycle the electrodes.

When the capacitive deionization is used as above, since separate configurations such as an ion exchange membrane and an ion exchange resin are not necessary, the configuration of the deionizing filter 130 is simplified. Also, since ions are adsorbed to the electrodes, the amplitude of a voltage for attracting the ions can be reduced as compared to the cases of electrodialysis and electrodeionization. That is, according to the capacitive deionization, the deionizing filter 130 can remove ions even with a low voltage. Therefore, the configuration of a power supply unit supplying power to the deionizing filter 130 can be simplified, and the price of the power supply unit can be reduced. In addition, since the deionizing filter 130 is driven with a low voltage, the energy consumption in a deionizing operation can be reduced.

However, the deionizing filter 130 is not limited to an electrodialysis filter, an electrodeionization filter, and a capacitive deionization filter. The structure of the deionizing filter 130 may vary as long as the deionizing filter 130 can remove dissolved solids by an application of power.

As described above, the deionizing filter 130 may use electrodialysis, electrodeionization, and/or capacitive deionization to remove dissolved solids (ionized materials) contained in raw water. Herein, the amount of dissolved solids removed by the deionizing filter 130 or a reduction rate of the dissolved solids is determined according to an input current applied to the deionizing filter 130.

Also, the control unit 200 controls an input current applied to the deionizing filter 130, such that water discharged through the deionizing filter 130 has target total dissolved solids (TDS).

The control unit 200 applies a predetermined fixed voltage to the deionizing filter 130 and controls the input current by pulse width modulation (PWM). The predetermined fixed voltage may vary according to a reduction rate of total dissolved solids inputted by the user (or total dissolved solids contained in extracted water).

The target total dissolved solids may be predetermined, or may be inputted by the user. The target total dissolved solids may vary according to a reduction rate of total dissolved solids inputted by the user (or total dissolved solids contained in extracted water).

In order to control a removal amount of total dissolved solids of the deionizing filter 130 by current control, the control unit 200 applies a predetermined fixed voltage to the deionizing filter 130. When the fixed voltage is applied to the deionizing filter 130, a current may flow in the deionizing filter 130 by positive ions and negative ions that are present in raw water. That is, since a redox action, in which negative ions in the raw water supply electrons to the positive electrode and the negative electrode supplies electrons to positive ions in the raw water, is generated, a current may flow in the deionizing filter 130.

When other conditions are the same, the current flowing in the deionizing filter 130 may be proportional to the amount of dissolved solids (ionized materials) removed by the deionizing filter 130. Therefore, the current flowing in the deionizing filter 130 may be controlled to control a reduction rate of total dissolved solids in raw water (a removal rate of dissolved solids).

More specifically, a total dissolved solid controlling apparatus 100' according to an aspect of the present invention controls an input current by pulse width modulation. The pulse width modulation may change an input period of a fixed voltage inputted to the deionizing filter 130 and control an input current while maintaining a voltage at a constant level. In order to implement the pulse width modulation, the control unit 200 may include a switching element. The control unit 200 may control an input current applied to the deionizing filter 130 based on a period of time when the switching element is closed, and dissolved solids (ionized materials) removed from raw water may be determined accordingly.

Also, the flow rate sensor 120 measures a flow rate of raw water flowing into the deionizing filter 130.

The flow rate sensor 120 provides information about the measured flow rate to the control unit 200. The total dissolved solid removal performance of the deionizing filter 130 may be affected not only by total dissolved solids in raw water, but also by a flow rate of raw water flowing into the deionizing filter 130. Accordingly, when the flow rate sensor 120 provides information about the measured flow rate to the control unit 200, the control unit 200 may control the deionizing filter 130 more accurately.

FIG. 12 is a functional block diagram illustrating a control unit 200 according to the present invention.

Referring to FIG. 12, the control unit 200 includes a determiner 210, an input current determiner 220, and an input current supplier 230, and may further include a data table 240.

The determiner 210 uses an input current to determine total dissolved solids in raw water having flowed into the deionizing filter 130. More specifically, the determiner 210 may use the data table 240 to determine total dissolved solids in raw water having flowed into the deionizing filter 130. In the data table 240, the flow rate of raw water, and the voltage and current applied to the deionizing filter 130 may be described in connection with the total dissolved solids.

Specifically, the magnitude of a load resistance may be determined by the amplitude of a fixed voltage applied to the deionizing filter 130 and the amplitude of a current flowing in the deionizing filter 130. Herein, the magnitude of a load resistance may include information about the amount of ions in raw water, that is, total dissolved solids. Thus, total dissolved solids (ionized materials) in raw water may be determined from the magnitude of a load resistance. However, as another embodiment, a total dissolved solid measurer (for example TDS meter) may be used, and the present invention does not preclude the use of a total dissolved solid measurer.

In addition, total dissolved solids contained in raw water may be experimentally determined based on the flow rate of raw water and the voltage and current applied to the deionizing filter 130, and the results may be described in a data table. Thus, the control unit 200 may use the data table 240 to determine the total dissolved solids in inflow raw water.

The input current determiner 220 compares the determined total dissolved solids with the target total dissolved solids, and determines an input current applied to the deionizing filter 130, based on the comparison results. The input current determiner 220 determines the input current applied to the deionizing filter 130, based on the comparison results of the determined total dissolved solids and the target total dissolved solids, or may determine the input current applied to the deionizing filter 130, based on the data table 240. In the data table 240, the flow rate of raw water, and the voltage and current applied to the deionizing filter 130 may be described in connection with the total dissolved solids.

If the determined total dissolved solids are greater than the target total dissolved solids, the input current determiner 220 may set an input current such that more current may flow in the deionizing filter 130 in order to increase the reduction rate of total dissolved solids in raw water (the removal rate of ionized materials). If the determined total dissolved solids are less than the target total dissolved solids, the input current determiner 220 may set an input current such that less current may flow in the deionizing filter 130 in order to reduce the reduction rate of total dissolved solids in raw water (the removal rate of ionized materials).

More specifically, the data table 240 may be used to set the input current. Since the amplitudes of current and voltage corresponding to the respective total dissolved solids are described in the data table 240, an input current to be applied to the deionizing filter 130 may be set according to this in order to obtain the target dissolved solids.

When current control is performed using pulse width modulation, an input current applied to the deionizing filter 130 may be set by setting a period of time when a current is applied to the deionizing filter 130.

Then, the input current supplier 230 may apply a predetermined fixed voltage to the deionizing filter 130 and supply the input current to the deionizing filter 130 by pulse width modulation.

The pulse width modulation may change an input period of a fixed voltage inputted to the deionizing filter 130 and control an input current while maintaining a voltage at a constant level. In order to implement the pulse width modulation, the control unit 230 may include a switching element. The control unit 200 may control a current applied to the deionizing filter 130 based on a period of time when the switching element is closed, and dissolved solids (ionized materials) removed from raw water may be determined accordingly.

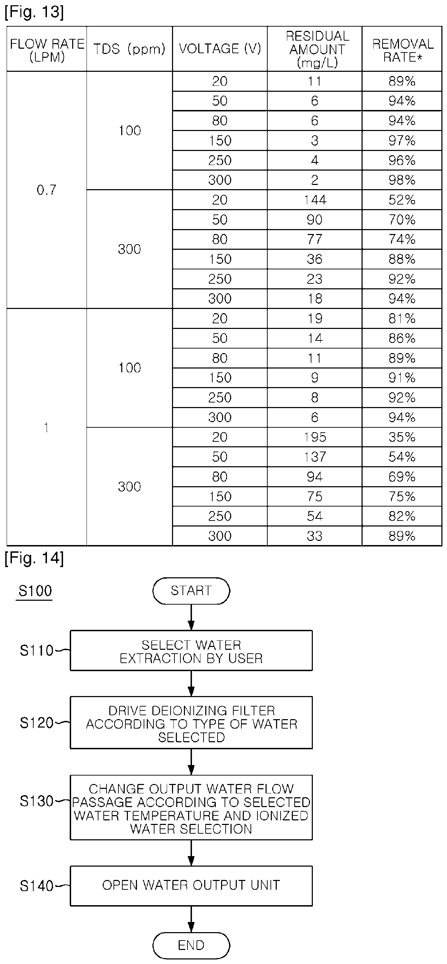

In the data table 240, the flow rate of raw water, and the voltage and current applied to the deionizing filter 130 may be described in connection with the total dissolved solids, as described above. A simple example of the data table 240 is illustrated in FIG. 13.

The measurement of a current flowing in the deionizing filter 130 may be compared with the data table 240 to determine total dissolved solids contained in raw water, and it may be determined which amount of current is to be applied to the deionizing filter 130 in order to obtain target total dissolved solids.

As described above, the control unit 200 may apply a predetermined fixed voltage to the deionizing filter 130 and may use pulse width modulation (PWM) to control an input current applied to the deionizing filter 130.

Hereinafter, a water treatment apparatus controlling method S100 will be described with reference to FIGS. 1 through 6, 14 and 15.

A water treatment apparatus controlling method S100 according to the present invention relates to a method for controlling a water treatment apparatus 100 including a deionizing filter 130 that removes total dissolved solids (TDS) contained in inflow water by an application of power. The water treatment apparatus controlling method S100 may include a user selection operation S 110 for receiving an extraction of mineral water generated by removing total dissolved solids from raw water to a predetermined level, or an extraction of ultra-pure water having less total dissolved solids than the mineral water, a deionizing filter driving operation S120 for applying power to the deionizing filter 130 to control total dissolved solids contained in water filtered by the deionizing filter 130 according to a type of water inputted in the user selection operation S 110, or a reduction rate of total dissolved solids removed by the deionizing filter 130, and a water outputting operation S140 for extracting mineral water or ultra-pure water filtered by the deionizing filter 130. The water treatment apparatus controlling method S100 may further include a output water flow passage changing operation S130 for controlling a temperature of water filtered by a filtering unit 110 before the water outputting operation S140.

In addition, when an ionized water generating unit 140 is provided as illustrated in FIGS. 4 through 6, a water treatment apparatus controlling method S100 may further include an operation for receiving an extraction of ionized water in the user selection operation S 110, and may further include an ionized water generating operation for generating ionized water by using the water filtered by the deionizing filter 130, in the output water flow passage changing operation S130, when an extraction of ionized water is inputted. In addition, the water outputting operation S140 may include an operation for extracting normal-temperature ionized water or cold ionized water.

In particular, when an extraction of ionized water is selected in the user selection operation S110, the deionizing filter driving operation S120 may include an operation for controlling the power applied to the deionizing filter 130 to generate mineral water in the deionizing filter 130 and supply the mineral water to the ionized water generating unit 140. For example, the mineral water may correspond to water whose reduction rate of total dissolved solids by the deionizing filter 130 is equal to or greater than about 30% and less than about 80%, in comparison with water (or raw water) that has not flowed into the deionizing filter 130, and the ultra-pure water may correspond to water whose reduction rate of total dissolved solids by the deionizing filter 130 is equal to or greater than about 80%; however, the present invention is not limited thereto.

In addition, as described above, the deionizing filter 130 may be configured to remove dissolved solids (ionized materials) contained in water, by any one of electrodialysis (ED), electrodeionization (EDI), and capacitive deionization (CDI).

Hereinafter, the deionizing filter driving operation S120 will be described in detail with reference to FIG. 15. The deionizing filter driving operation S120 may be included in a total dissolved solid controlling method S100' according to another aspect of the present invention.

A deionizing filter driving operation S120 included in a water treatment apparatus controlling method S100 according to the present invention and a total dissolved solid controlling method S100' according to the present invention includes a fixed voltage applying operation S121, a dissolved solid removing operation S122, a current measuring and flow rate measuring operation S123, a total dissolved solid determining operation S124, a total dissolved solid comparing operation S125, an input current determining operation S126, and an input current applying operation S127.

The fixed voltage applying operation S121 may be configured to apply a predetermined fixed voltage to a deionizing filter 130. Herein, the fixed voltage applied to the deionizing filter 130 may vary according to a reduction rate of total dissolved solids inputted by a user. According to the present invention, since a predetermined fixed voltage is applied, a load resistance can be easily detected from a current flowing in the deionizing filter 130, and total dissolved solids (TDS) in raw water can be determined (measured) accordingly. Also, unlike a voltage-controlled method, since a fixed voltage is applied, a complex configuration for voltage control may not be included. The fixed voltage may be applied by the control unit 200 to the deionizing filter 130.

The dissolved solid removing operation S122 is configured to use the fixed voltage to remove dissolved solids (ionized materials) contained in raw water flowing into the deionizing filter 130. The deionizing filter 130 may use electrodialysis, electrodeionization, and/or capacitive deionization to remove dissolved solids contained in raw water.

The current measuring and flow rate measuring operation S123 measures the amplitude of a current flowing in the deionizing filter 130 by the fixed voltage and flow rate of raw water flowing into the deionizing filter 130. Information about the measured current and flow rate is transmitted to the control unit 200.

The total dissolved solid determining operation S124 is configured to determine total dissolved solids in raw water by using the measured amplitude of the current. The total dissolved solids may be determined using a table in which the flow rate of raw water and the voltage and current applied to the deionizing filter 130 are described in connection with the total dissolved solids. Specifically, the magnitude of a load resistance may be determined by the amplitude of a fixed voltage applied to the deionizing filter 130 and the amplitude of a current flowing in the deionizing filter 130. Herein, since the magnitude of a load resistance includes information about the amount of total dissolved solids (ionized materials) in raw water (that is, total dissolved solids) the amount of ions in raw water (that is, total dissolved solids) may be determined from the magnitude of a load resistance.

In addition, total dissolved solids contained in raw water may be experimentally determined based on the flow rate of raw water and the voltage and current applied to the deionizing filter 130, and the results may be described in a table (see FIG. 13). The total dissolved solids in the inflow raw water may be determined using a table in which the flow rate of raw water and the voltage and current applied to the deionizing filter 130 are described in connection with the total dissolved solids.

The total dissolved solid comparing operation S125 is configured to compare the determined (measured) total dissolved solids of raw water with the target total dissolved solids. It is determined whether the determined total dissolved solids are equal to the target total dissolved solids. If the determined total dissolved solids are equal to the target total dissolved solids, a feedback method controlling an input current applied to the deionizing filter 130 may be used.

The input current determining operation S126 is configured to determine the amplitude of a current to be applied to the deionizing filter 130, based on the comparison results of the determined (measured) total dissolved solids of raw water and the target total dissolved solids. In addition, the current applied to the deionizing filter 130 is determined based on the measured flow rate of raw water and the comparison results of the determined (measured) total dissolved solids of raw water and the target total dissolved solids, or may be determined using a table in which the flow rate of raw water and the voltage and current applied to the deionizing filter 130 are described in connection with the total dissolved solids.

If the determined total dissolved solids is greater than the target total dissolved solids, an input current may be set such that more current may flow in the deionizing filter 130 in order to increase the reduction rate of total dissolved solids in raw water (the removal rate of total dissolved solids (ionized materials)). If the determined total dissolved solids is less than the target total dissolved solids, an input current may be set such that less current may flow in the deionizing filter 130 in order to reduce the reduction rate of total dissolved solids in raw water (the removal rate of total dissolved solids (ionized materials)).

More specifically, the input current may be set based on a table in which the flow rate of raw water and the voltage and current applied to the deionizing filter 130 are described in connection with the total dissolved solids.

The input current applying operation S127 is configured to apply the determined current to the deionizing filter 130 by pulse width modulation. The pulse width modulation may change an input period of a fixed voltage inputted to the deionizing filter 130 and control an input current while maintaining a voltage at a constant level. In order to implement the pulse width modulation, the control unit 200 may include a switching element (not illustrated). The control unit 200 may control a current applied to the deionizing filter 130 based on a period of time when the switching element is closed, and dissolved solids (ionized materials) removed from raw water may be determined accordingly.

In this manner, the deionizing filter driving operation S120 is configured to apply a predetermined fixed voltage to the deionizing filter 130 and control an input current applied to the deionizing filter 130, by pulse width modulation.

Meanwhile, a water treatment apparatus including a total dissolved solid controlling apparatus according to the present invention may include the above-described total dissolved solid controlling apparatus (100' of FIG. 11).

## Claims

1. A total dissolved solid (TDS) controlling apparatus comprising:
a filtering unit including a deionizing filter removing dissolved solids from inflow raw water by an input current; and
a control unit controlling the input current such that water discharged from the deionizing filter corresponds to target total dissolved solids,
wherein the control unit comprises:
a determiner determining total dissolved solids contained in raw water having flowed into the deionizing filter, by using an input current; and
an input current determiner comparing the determined total dissolved solids with the target total dissolved solids, and determining an input current applied to the deionizing filter, based on the comparison results;
an input current supplier applying a predetermined fixed voltage to the deionizing filter, and supplying the input current to the deionizing filter by pulse width modulation (PWM); and
a flow rate sensor measuring a flow rate of raw water flowing into the deionizing filter,
wherein the input current determiner determines the input current applied to the deionizing filter, based on the comparison results of the determined total dissolved solids and the target total dissolved solids, and the flow rate of raw water measured by the flow rate sensor.

2. The total dissolved solid controlling apparatus of claim 1, wherein the input current determiner determines the input current applied to the deionizing filter, based on a table in which the flow rate of raw water and the voltage and current applied to the deionizing filter are described in connection with the total dissolved solids.

3. The total dissolved solid controlling apparatus of claim 1, wherein the determiner determines the total dissolved solids of the inflow raw water, based on a table in which the flow rate of raw water and the voltage and current applied to the deionizing filter are described in connection with the total dissolved solids.

4. The total dissolved solid controlling apparatus of claim 1, wherein the deionizing filter removes dissolved solids in water by at least one of electrodialysis (ED), electrodeionization (EDI), and capacitive deionization (CDI).

5. A total dissolved solid (TDS) controlling method comprising:
applying a predetermined fixed voltage to a deionizing filter;
removing dissolved solids from raw water flowing into the deionizing filter, by using the applied fixed voltage;
measuring a flow rate of the raw water flowing into the deionizing filter;
measuring an amplitude of a current flowing in the deionizing filter by the applied fixed voltage;
determining total dissolved solids in the raw water by using the measured amplitude of the current;
comparing the determined total dissolved solids with target total dissolved solids, and
determining a current to be applied to the deionizing filter, based on the comparison results of the determined total dissolved solids and the target total dissolved solids, and the measured flow rate of the raw water; and
applying the determined current to deionizing filter by pulse width modulation (PWM).

6. The total dissolved solid controlling method of claim 5, wherein the determining of the amplitude of the current determines a current applied to the deionizing filter, based on a table in which the flow rate of raw water and the voltage and current applied to the deionizing filter are described in connection with the total dissolved solids.

7. The total dissolved solid controlling method of claim 5, wherein the determining of the total dissolved solids in the raw water determines the total dissolved solids of the inflow raw water, based on a table in which the flow rate of raw water and the voltage and current applied to the deionizing filter are described in connection with the total dissolved solids.

8. The total dissolved solid controlling method of claim 5, wherein the deionizing filter removes dissolved solids in water by at least one of electrodialysis (ED), electrodeionization (EDI), and capacitive deionization (CDI).

9. A water treatment apparatus comprising a total dissolved solid (TDS) controlling apparatus according to any one of claims 1 through 4.

## Patentansprüche

1. Vorrichtung zur Steuerung komplett gelöster Feststoffe (Total Dissolved Solid, TDS), umfassend:
eine Filtereinheit mit einem Deionisierungsfilter zum Entfernen von gelösten Feststoffen aus einfließendem Rohwasser mithilfe eines Eingangsstroms; und
eine Steuereinheit zum Steuern des Eingangsstroms derart, dass das Wasser,
das aus dem Deionisierungsfilter ausgestoßen wird, einem Zielwert an komplett gelösten Feststoffen entspricht,
wobei die Steuereinheit umfasst:
eine Bestimmungseinrichtung zum Bestimmen der komplett gelösten Feststoffe, die in dem Rohwasser enthalten sind, das in den Deionisierungsfilter geflossen ist, unter Verwendung eines Eingangsstroms; und
eine Eingangsstrom-Bestimmungseinrichtung zum Vergleichen der bestimmten komplett gelösten Feststoffe mit dem Zielwert der komplett gelösten Feststoffe, und zum Bestimmen eines Eingangsstroms, der an den Deionisierungsfilter anzulegen ist, basierend auf den Vergleichsergebnissen;
eine Eingangsstromversorgung zum Anlegen einer vorgegebenen Festspannung an den Deionisierungsfilter und zum Leiten des Eingangsstroms zu dem Deionisierungsfilter mittels Pulsbreitenmodulation (PWM); und
einen Durchflusssensor zum Messen einer Durchflussrate des Rohwassers, das in den Deionisierungsfilter fließt,
wobei die Eingangsstrom-Bestimmungseinrichtung den an den Deionisierungsfilter angelegten Eingangsstrom bestimmt, basierend auf den Vergleichsergebnissen der bestimmten komplett gelösten Feststoffe und des Zielwerts der komplett gelösten Feststoffe, und der Durchflussrate des Rohwassers, die von dem Durchflusssensor gemessen wird.

2. Vorrichtung zur Steuerung komplett gelöster Feststoffe nach Anspruch 1, wobei die Eingangsstrom-Bestimmungseinrichtung den an den Deionisierungsfilter angelegten Eingangsstrom bestimmt, basierend auf einer Tabelle, in der die Durchflussrate des Rohwassers sowie die Spannung und der Strom, die an den Deionisierungsfilter angelegt werden, in Verbindung mit den komplett gelösten Feststoffen beschrieben sind.

3. Vorrichtung zur Steuerung komplett gelöster Feststoffe nach Anspruch 1, wobei die Eingangsstrom-Bestimmungseinrichtung die komplett gelösten Feststoffe des einfließenden Rohwassers bestimmt, basierend auf einer Tabelle, in der die Durchflussrate des Rohwassers sowie die Spannung und der Strom, die an den Deionisierungsfilter angelegt werden, in Verbindung mit den komplett gelösten Feststoffen beschrieben sind.

4. Vorrichtung zur Steuerung komplett gelöster Feststoffe nach Anspruch 1, wobei der Deionisierungsfilter im Wasser gelöste Feststoffe durch mindestens eines aus Elektrodialyse (ED), Elektrodeionisierung (EDI) und kapazitiver Deionisierung (CDI) entfernt.

5. Verfahren zur Steuerung komplett gelöster Feststoffe (Total Dissolved Solid, TDS), umfassend:
Anlegen einer vorgegebenen Festspannung an einen Deionisierungsfilter;
Entfernen von gelösten Feststoffen aus Rohwasser, das in den Deionisierungsfilter fließt, unter Verwendung der angelegten Festspannung;
Messen einer Durchflussrate des Rohwassers, das in den Deionisierungsfilter fließt,
Messen einer Amplitude eines Stroms, der bei der angelegten Festspannung in den Deionisierungsfilter fließt;
Bestimmen der komplett gelösten Feststoffe in dem Rohwasser unter Verwendung der gemessenen Amplitude des Stroms;
Vergleichen der bestimmten komplett gelösten Feststoffe mit einem Zielwert an komplett gelösten Feststoffen, und
Bestimmen des an den Deionisierungsfilter anzulegenden Eingangsstroms, basierend auf den Vergleichsergebnissen der bestimmten komplett gelösten Feststoffe und des Zielwerts der komplett gelösten Feststoffe, und der gemessenen Durchflussrate des Rohwassers; und
Anlegen des bestimmten Stroms an den Deionisierungsfilter mittels Pulsbreitenmodulation (PWM).

6. Verfahren zur Steuerung komplett gelöster Feststoffe nach Anspruch 5, wobei das Bestimmen der Amplitude des Stroms einen an den Deionisierungsfilter angelegten Eingangsstrom bestimmt, basierend auf einer Tabelle, in der die Durchflussrate des Rohwassers sowie die Spannung und der Strom, die an den Deionisierungsfilter angelegt werden, in Verbindung mit den komplett gelösten Feststoffen beschrieben sind.

7. Verfahren zur Steuerung komplett gelöster Feststoffe nach Anspruch 5, wobei das Bestimmen der komplett gelösten Feststoffe in dem Rohwasser die komplett gelösten Feststoffe des einfließenden Rohwassers bestimmt, basierend auf einer Tabelle, in der die Durchflussrate des Rohwassers sowie die Spannung und der Strom, die an den Deionisierungsfilter angelegt werden, in Verbindung mit den komplett gelösten Feststoffen beschrieben sind.

8. Verfahren zur Steuerung komplett gelöster Feststoffe nach Anspruch 5, wobei der Deionisierungsfilter im Wasser gelöste Feststoffe durch mindestens eines aus Elektrodialyse (ED), Elektrodeionisierung (EDI) und kapazitiver Deionisierung (CDI) entfernt.

9. Wasserbehandlungsvorrichtung, umfassend eine Vorrichtung zur Steuerung komplett gelöster Feststoffe (Total Dissolved Solid, TDS) nach einem der Ansprüche 1 bis 4.

## Revendications

1. Appareil de régulation de matières dissoutes totales (MDT) comprenant :
une unité de filtrage incluant un filtre désionisant éliminant les solides dissous d'une eau brute d'arrivée au moyen d'un courant d'entrée ; et
une unité de régulation régulant le courant d'entrée de telle sorte que l'eau libérée du filtre désionisant correspond au total des solides dissous cible,
dans lequel l'unité de régulation comprend :
un déterminateur déterminant le total des solides dissous contenus dans l'eau brute s'étant écoulée dans le filtre désionisant, au moyen d'un courant d'entrée ; et
un déterminateur de courant d'entrée comparant le total des solides dissous déterminé au total des solides dissous cible, et déterminant un courant d'entrée appliqué au filtre désionisant, sur la base des résultats de comparaison ;
un fournisseur de courant d'entrée appliquant une tension fixe prédéterminée au filtre désionisant, et fournissant le courant d'entrée au filtre désionisant par modulation d'impulsions en largeur (MIL) ; et
un capteur de débit mesurant un débit d'eau brute s'écoulant dans le filtre désionisant,
dans lequel le déterminateur de courant d'entrée détermine le courant d'entrée appliqué au filtre désionisant, sur la base des résultats de comparaison entre les matières dissoutes totales déterminées et les matières dissoutes totales cibles, et du débit d'eau brute mesuré par le capteur de débit.

2. Appareil de régulation de matières dissoutes totales selon la revendication 1, dans lequel le déterminateur de courant d'entrée détermine le courant d'entrée appliqué au filtre désionisant, sur la base d'un tableau dans lequel le débit d'eau brute et la tension et le courant appliqués au filtre désionisant sont décrits en relation avec le total des solides dissous.

3. Appareil de régulation de matières dissoutes totales selon la revendication 1, dans lequel le déterminateur détermine le total des solides dissous de l'eau brute d'arrivée, sur la base d'un tableau dans lequel le débit d'eau brute et la tension et le courant appliqués au filtre désionisant sont décrits en relation avec le total des solides dissous.

4. Appareil de régulation de matières dissoutes totales selon la revendication 1, dans lequel le filtre désionisant élimine les solides dissous dans l'eau au moyen d'au moins une d'une électrodialyse (ED), d'une électrodésionisation (EDI) et d'une désionisation capacitive (CDI).

5. Procédé de régulation de matières dissoutes totales (MDT) comprenant :
l'application d'une tension fixe prédéterminée à un filtre désionisant ;
l'élimination des solides dissous de l'eau brute s'écoulant dans le filtre désionisant, au moyen de la tension fixe appliquée ;
la mesure d'un débit de l'eau brute s'écoulant dans le filtre désionisant ;
la mesure d'une amplitude d'un courant circulant dans le filtre désionisant au moyen de la tension fixe appliquée ;
la détermination de matières dissoutes totales dans l'eau brute au moyen de l'amplitude du courant mesurée ;
la comparaison entre les matières dissoutes totales déterminées et les matières dissoutes totales cibles, et
la détermination d'un courant devant être appliqué au filtre désionisant, sur la base des résultats de comparaison entre les matières dissoutes totales déterminées et les matières dissoutes totales cibles, et du débit mesuré de l'eau brute ; et
l'application du courant déterminé au filtre désionisant par modulation d'impulsions en largeur (MIL).

6. Procédé de régulation de matières dissoutes totales selon la revendication 5, dans lequel la détermination de l'amplitude du courant détermine un courant appliqué au filtre désionisant, sur la base d'un tableau dans lequel le débit d'eau brute et la tension et le courant appliqués au filtre désionisant sont décrits en relation avec le total des solides dissous.

7. Procédé de régulation de matières dissoutes totales selon la revendication 5, dans lequel la détermination de matières dissoutes totales dans l'eau brute détermine le total des solides dissous de l'eau brute d'arrivée, sur la base d'un tableau dans lequel le débit d'eau brute et la tension et le courant appliqués au filtre désionisant sont décrits en relation avec le total des solides dissous.

8. Procédé de régulation de matières dissoutes totales selon la revendication 5, dans lequel le filtre désionisant élimine les solides dissous dans l'eau au moyen d'au moins une d'une électrodialyse (ED), d'une électrodésionisation (EDI) et d'une désionisation capacitive (CDI).

9. Appareil de traitement d'eau comprenant un appareil de régulation de matières dissoutes totales (MDT) selon l'une quelconque des revendications 1 à 4.
